Europäisches Patentamt

European Patent Office

Office européen des brevets

(19)

(11) Numéro de publication : **0 020 213**
**B1**

(12)

# FASCICULE DE BREVET EUROPÉEN

(45) Date de publication du fascicule du brevet :
26.01.83

(51) Int. Cl.³ : **F 16 L 37/00**, F 16 L 41/00

(21) Numéro de dépôt : **80400633.6**

(22) Date de dépôt : **09.05.80**

(54) **Raccord de branchement d'un drain sur un collecteur.**

(30) Priorité : **11.05.79 FR 7911979**

(43) Date de publication de la demande :
**10.12.80 Bulletin 80/25**

(45) Mention de la délivrance du brevet :
**26.01.83 Bulletin 83/04**

(84) Etats contractants désignés :
**AT BE CH DE GB IT LI LU NL SE**

(56) Documents cités :
**GB A 1 026 000**
**US A 3 926 222**

(73) Titulaire : **SYNDICAT NATIONAL DES ENTREPRISES DE DRAINAGE**
**ZA de Courtabœuf Immeuble ATLAS Avenue de la Baltique**
**F-91940 Les Ulis (FR)**

**LES PLASTIQUES DE FRANCE Société Anonyme**
**7 et 9, rue Gustave-Eiffel**
**F-13010 Marseille (FR)**

(72) Inventeur : **Fournier, Christian**
**50 Rue du Gué de Ville**
**F-77550 Moissy Cramayel (FR)**
Inventeur : **Scialom, Richard**
**8A Rue Bienvenu**
**F-13010 Marseille (FR)**

(74) Mandataire : **Tony-Durand, Serge**
**Cabinet Tony-Durand 22, Boulevard Voltaire**
**F-75011 Paris (FR)**

Raccord de branchement d'un drain sur un collecteur

La présente invention a pour objet un raccord de branchement d'un drain sur un collecteur.

On connaît différents types de raccords permettant de brancher un tuyau de drainage sur un collecteur. Ainsi, une première réalisation décrite dans le GB-A-1 026 000, comporte un clip adapté à venir s'emboîter sur le collecteur, et qui est réalisé d'une seule pièce avec un embout d'axe perpendiculaire à celui du collecteur, cet embout étant adapté pour recevoir l'extrémité du drain à raccorder au collecteur.

Dans un autre raccord connu, le clip et l'embout ou pipe coudée sont séparés, l'extrémité coudée de cette pipe venant s'emboîter dans une collerette faisant saillie au-dessus du drain, autour d'une ouverture de communication.

Dans le premier raccord ci-dessus, le drain ne peut pivoter par rapport au collecteur, du fait que le raccord est constitué d'une seule pièce, ce qui présente un inconvénient évident puisque le drain doit être rigoureusement perpendiculaire à l'axe du collecteur, faute de quoi le raccord ne peut être convenablement réalisé.

D'autre part, dans le second raccord, si la pipe peut pivoter par rapport au clip et par conséquent au collecteur, rien n'est prévu pour maintenir la pipe emboîtée dans la collerette du collecteur, après introduction du tuyau de drainage dans la pipe. De ce fait, la pipe peut se déboîter plus ou moins du collecteur consécutivement aux contraintes qu'elle subit, de sorte que le raccord ne fonctionne plus correctement.

Par ailleurs, le raccord monobloc mentionné ci-dessus, comporte une partie qui fait saillie à l'intérieur du clip et du collecteur, et constitue une entrave hydraulique susceptible de perturber le bon écoulement des eaux à l'intérieur du collecteur.

C'est pourquoi la présente invention a pour but de réaliser un raccord ne présentant pas ces inconvénients.

Le raccord de branchement d'un drain sur un collecteur visé par l'invention comprend une pipe coudée et un clip adapté pour s'emboîter sur le collecteur et pour recevoir la pipe, ce clip étant percé d'une ouverture devant être positionnée en regard d'une ouverture correspondante du collecteur.

Conformément à l'invention, le pourtour de l'ouverture du clip et l'extrémité correspondante de la pipe sont pourvus de moyens d'encliquetage mutuel permettant une libre rotation de la pipe sur le clip, et les génératrices inférieures de la pipe viennent tangenter les génératrices supérieures du collecteur, de telle sorte que l'intervalle en hauteur entre la partie inférieure de la pipe et la partie supérieure du collecteur est presque nul.

Dans une forme de réalisation, les moyens d'encliquetage consistent en des griffes agencées dans l'ouverture du clip et en une rainure périphérique correspondante réalisée dans la partie terminale de la pipe.

Les pièces constitutives du raccord étant réalisées par exemple en matière plastique, on engage à force l'extrémité coudée de la pipe dans les griffes, de façon que celles-ci viennent s'encliqueter dans la rainure de la pipe. Dans ces conditions, la pipe est fermement assujettie au clip, tout en pouvant tourner librement par rapport à celui-ci et au collecteur.

Mais l'agencement inverse peut aussi être réalisé, à savoir les griffes agencées dans la partie terminale de la pipe, et la rainure dans l'ouverture du clip.

D'autres particularités et avantages de l'invention apparaîtront au cours de la description qui va suivre. Aux dessins annexés, donné à titre d'exemple non limitatif, on a représenté un mode de réalisation du raccord selon l'invention.

La figure 1 est une vue en perspective montrant d'une part le clip du raccord selon l'invention, monté sur le collecteur, et d'autre part le raccord complet, pourvu de la pipe emboîtée sur le clip.

La figure 2 est une vue en coupe transversale avec arrachements, du raccord de la figure 1 branché sur le collecteur.

La figure 3 est une vue en élévation longitudinale de la pipe coudée du raccord des figures 1 et 2.

La figure 4 est une vue en élévation du clip associé à la pipe de la figure 3 pour constituer le raccord selon l'invention.

La figure 5 est une vue en perspective illustrant la façon dont l'ouverture de branchement du drain au raccord peut être exécutée au moyen d'un outil approprié.

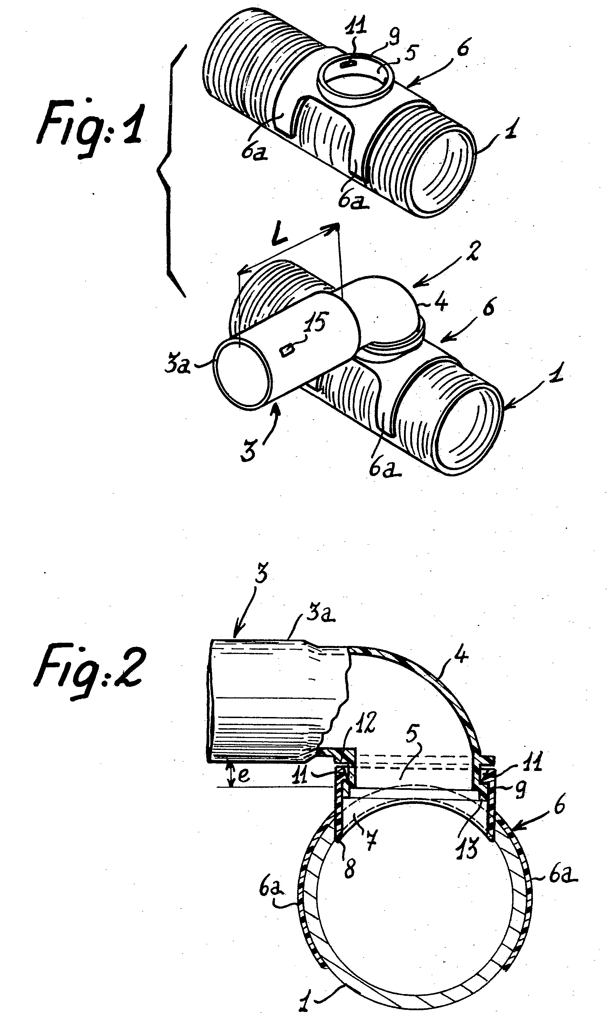

En se reportant aux figures 1 à 4, on voit un collecteur 1, percé d'une multitude de petits trous non représentés, destinés à collecter des eaux d'écoulement par exemple dans les champs, à partir de drains, non représentés, s'étendant dans une direction sensiblement perpendiculaire à l'axe du collecteur 1, avec lequel ils doivent être raccordés au moyen de raccords tels que le raccord 2.

Celui-ci comprend une pipe 3 pourvue d'une extrémité coudée 4 dont l'ouverture débouche dans l'ouverture correspondante 5 d'un clip 6 devant être positionné en regard d'une ouverture 7 correspondante du collecteur 1.

Le drain non représenté vient s'emboîter dans la pipe 3. De façon connue, le clip 6 est constitué d'une sorte de coiffe dont les flancs incurvés enserrent élastiquement le collecteur 1.

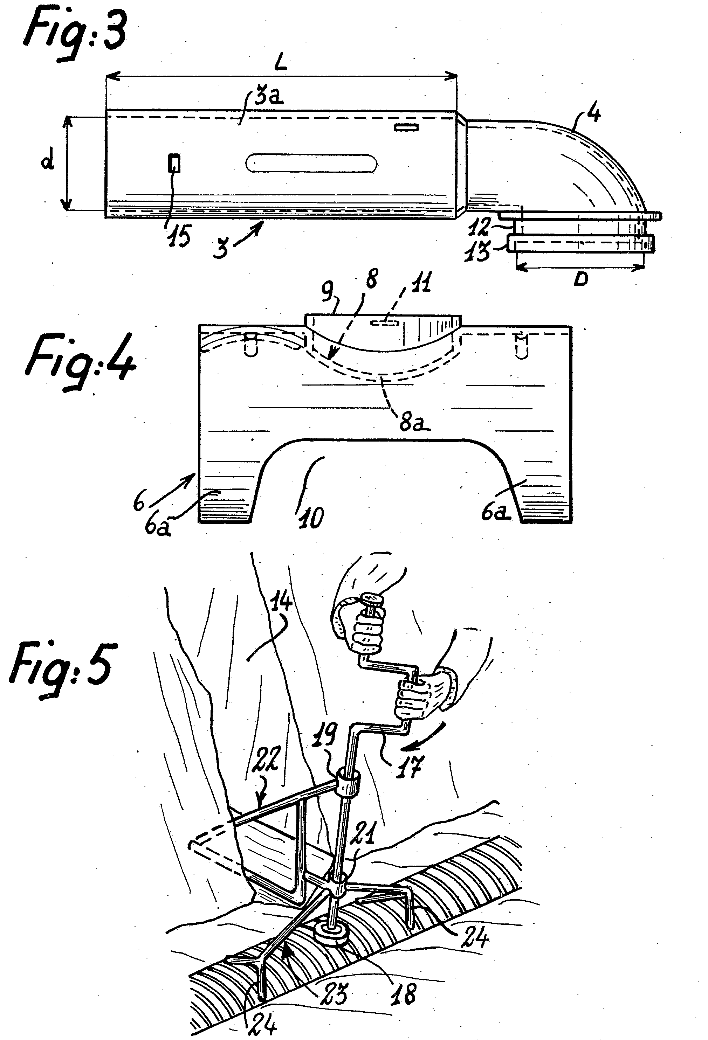

Suivant une caractéristique de l'invention, le clip 6 est muni, autour de son ouverture 5, d'un collet 8 dirigé vers l'intérieur du collecteur 1, et apte à s'engager à l'intérieur de l'ouverture 7 de ce dernier. A cette fin, le collet 8 a un diamètre légèrement inférieur à celui de l'ouverture 7, afin de pouvoir pénétrer sans difficulté dans celle-ci. De plus, le collet 8 est ménagé dans le prolongement d'un collier 9 faisant saillie au-dessus des flancs incurvés 6a, et dans lequel vient s'emboîter l'extrémité coudée 4 de la pipe 3. Suivant une caractéristique complémentaire de l'invention, la périphérie du collet 8 est découpée de façon à épouser la courbure intérieure du collecteur cylindrique 1, comme on le voit en particulier à la figure 4, sur laquelle un arrondi latéral 8a du collet 8 est représenté.

De ce fait, le collet 8 ne présente aucune saillie à l'intérieur du collecteur 1, comme on s'en rend compte d'après la figure 2.

Le pourtour de l'ouverture 5 du clip 6 est pourvu, suivant une autre particularité de l'invention, de griffes 11 dont deux sont visibles à la figure 2, et qui sont adaptées pour venir s'encliqueter à force dans une rainure périphérique 12 correspondante de la partie terminale coudée 4 de la pipe. Les griffes 11 peuvent être en nombre variable, par exemple 3 espacées angulairement de 120°. La bordure terminale 13 de la partie coudée 4 est donc engagée sous les griffes 11 après avoir été introduite à force dans le clip (position illustrée à la figure 2).

Cet engagement par encliquetage élastique permet une libre rotation de la pipe 3 autour de l'axe de l'ouverture 5 du clip.

Les génératrices inférieures de la partie cylindrique 3a de la pipe viennent pratiquement tangenter les génératrices supérieures du collecteur 1, de telle sorte que l'intervalle e en hauteur entre la partie inférieure cylindrique 3a de la pipe et la partie supérieure du collecteur 1 est presque nul, ou réduit à une valeur très faible par rapport à la réalisation antérieure mentionnée ci-dessus, dans laquelle l'extrémité coudée de la pipe s'enfonce dans une collerette du clip.

La longueur L d'emboîtement de la pipe 3 dans le drain est suffisante pour permettre à celle-ci de prendre appui sur le fond de la tranchée dans laquelle doit être posé le drain. Une telle tranchée est référencée 14 sur la vue en perspective de la figure 5.

Enfin, la pipe 3 est percée, dans sa partie cylindrique 3a prévue pour l'emboîtement avec le drain, d'un orifice 15 formant fenêtre qui permet de contrôler la longueur d'emboîtement du drain dans la pipe, et l'extrémité coudée 4 est évasée de telle sorte que son ouverture terminale a un diamètre D (figure 3) supérieur au diamètre d du drain.

La mise en œuvre et les avantages du raccord de branchement selon l'invention sont les suivants.

Tout d'abord, on aménage dans le collecteur 1 à demi-enterré (figure 5) des ouvertures telles que 7, de place en place aux endroits prévus pour les branchements avec les différents drains, ceux-ci étant placés au fond de tranchées perpendiculaires à la tranchée contenant le collecteur 1, telle que la tranchée 14. Le perçage des ouvertures 7 s'exécute avantageusement au moyen de l'outil représenté à la figure 5.

Cet outil comporte une sorte de manivelle 17 dont l'extrémité inférieure est équipée d'une scie circulaire 18 de diamètre variable en fonction du diamètre de la perforation devant être exécutée dans le collecteur 1. Le manche de cette manivelle 17 traverse des manchons 19, 21, respectivement solidaires d'appuis 22, 23 constitués par des bras reposant sur le fond de la tranchée 14 en ce qui concerne l'appui 22, et sur le collecteur 1 en ce qui concerne l'appui 23. Ce dernier comporte deux bras analogues qui s'étendent de part et d'autre du manchon 21, et qui sont munis de crampons terminaux 24 reposant sur le collecteur.

Grâce à cet agencement, le trou 7 à percer dans le collecteur 1 peut être incliné sur la verticale de façon à correspondre exactement à la pente de la tranchée 14 et par conséquent du drain à raccorder au collecteur 1, ce qui garantit l'exécution d'une pose et d'un branchement parfaitement corrects du raccord.

Le collecteur 1 étant réalisé par exemple en chlorure de polyvinyle lisse ou annelé, les scies circulaires 18 en permettent une perforation convenable. Il est en effet important pour le bon fonctionnement du raccord, que l'ouverture 7 correspondante du collecteur présente l'inclinaison exacte voulue, l'expérience montrant que tout autre outil que l'outil ci-dessus (couteau par exemple) donne des résultats défectueux.

Une fois l'ouverture 7 percée, on positionne le clip 6 de façon que son collet 8 s'emboîte à l'intérieur de l'ouverture 7, jusqu'à la position représentée à la figure 2, dans laquelle le clip 6 est fermement maintenu par le collet 8 et l'élasticité de ses flancs 6a qui enserrent le collecteur.

On introduit ensuite à force la bordure terminale de l'extrémité coudée 4 sous les griffes 11, de façon à réaliser un encliquetage qui maintient fermement la pipe 3 assujettie au clip 6, les griffes 11 ayant pénétré dans la rainure périphérique 12 comme indiqué ci-dessus (figure 2).

La pipe 3 est alors assujettie au clip 6 tout en pouvant tourner librement par rapport à celle-ci, autour de l'axe de l'ouverture 5.

Il ne reste plus qu'à introduire l'extrémité du drain dans la longueur L de la pipe 3, prévue pour cet emboîtement. L'orifice ou fenêtre 15 permet de visualiser cet emboîtement, afin de s'assurer que le drain a pénétré jusqu'à une longueur minimum à l'intérieur de la pipe 3.

Le fait de prévoir une longueur d'emboîtement L largement supérieure à la longueur habituelle dans les raccords connus, permet à la pipe 3 de prendre appui sur le bord de la tranchée 14 du drain correspondant, en débordant la partie foisonnée. Ceci présente l'avantage d'éviter tout risque d'affaissement et de basculement de la pipe 3.

Par ailleurs, l'aménagement d'un orifice terminal de l'extrémité coudée 4 ayant un diamètre D nettement supérieur au diamètre d du drain facilite l'évacuation des corps solides transportés (sables, racines, limons, etc..).

Enfin, la réalisation d'un intervalle en hauteur e très faible, presque nul, entre les génératrices inférieures de la pipe 3 et les génératrices supé-

rieures du collecteur 1, contribue à une meilleure tenue du raccord, tandis que l'absence de toute saillie du collet 8 à l'intérieur de la section de passage du collecteur 1, évite toute entrave hydraulique et favorise par conséquent un meilleur écoulement des eaux dans le collecteur.

L'invention n'est pas limitée à la forme de réalisation décrite et peut comporter des variantes d'exécution. Ainsi, les moyens pour assurer l'encliquetage de l'extrémité coudée 4 dans le clip 6 peuvent être différents de ceux représentés ; la bordure terminale de l'extrémité 4 pourrait ainsi comporter des griffes analogues aux griffes 11, ou une collerette qui viendrait s'encastrer à force dans une rainure agencée dans le collier 9.

**Revendications**

1. Raccord de branchement d'un drain sur un collecteur (1) comprenant une pipe coudée (3) et un clip adapté (6) pour s'emboîter sur le collecteur (1) et pour recevoir la pipe (3), ce clip (6) étant percé d'une ouverture (5) devant être positionnée en regard d'une ouverture correspondante du collecteur (1), et étant muni, autour de son ouverture (5), d'un collet (8) dirigé vers l'intérieur du collecteur (1), apte à s'engager à l'intérieur de l'ouverture de ce dernier, et dont la périphérie est découpée de façon à épouser la courbure intérieure du collecteur (1), caractérisé en ce que le pourtour de l'ouverture (5) du clip (6) et l'extrémité correspondante de la pipe (3) sont pourvus de moyens d'encliquetage mutuel (11, 12), permettant une libre rotation de la pipe (3) sur le clip (6), et en ce que les génératrices inférieures de la pipe (3) viennent tangenter les génératrices supérieures du collecteur (1), de telle sorte que l'intervalle en hauteur (e) entre la partie inférieure (3a) de la pipe (3) et la partie supérieure du collecteur (1) est presque nul.

2. Raccord selon la revendication 1, caractérisé en ce que la longueur (L) d'emboîtement de la pipe (3) dans le drain est suffisante pour permettre à celle-ci de prendre appui sur le fond de la tranchée dans laquelle doit être posé le drain, de façon à éviter tous risques d'affaissement de la pipe (3).

3. Raccord selon l'une des revendications 1 et 2, caractérisé en ce que la pipe (3) est percée d'un orifice (15), permettant de contrôler la longueur d'emboîtement du drain dans la pipe.

4. Raccord selon l'une des revendications 1 à 3, caractérisé en ce que l'extrémité coudée (4) de la pipe (3), devant être emboîtée dans le clip (6), est évasée et son ouverture terminale a un diamètre (D) supérieur à celui (d) du drain.

5. Raccord selon l'une des revendications 1 à 4, caractérisé en ce que les moyens d'encliquetage consistent en des griffes (11) agencées dans l'ouverture (5) du clip (6) ou dans la partie terminale (4) de la pipe (3), et en une rainure périphérique correspondante (12) réalisée dans la partie terminale (4) de la pipe (3) ou dans l'ouverture (5) du clip (6).

**Claims**

1. An union for connecting a drain-pipe to a main drain (1), which comprises a bent pipe section (3) having an elbow (4) at its outlet end and a clip (6) adapted to be snap fitted to the main drain (1) and coupled to said pipe section (3), said clip (6) further comprising on the one hand an aperture (5) adapted to be brought into axial alignment with a corresponding aperture formed through the wall of said main drain (1) and, on the other hand, about said aperture (5), a neck (8) extending towards the interior of said main drain (1) and fitting into the aperture thereof, the outer edge of said neck (8) being shaped to correspond to the inner curvature of said main drain (1), characterized in that matching detent-positioning and coupling means are provided on the outer periphery of said clip (6) and on the adjacent end of said pipe section (3) to permit the free rotation thereof with respect to said clip (6), and that the lower generatrices of said pipe section (3) are adapted to be brought to a position tangent to the upper generatrices of said main drain (1), whereby the vertical gap left between the lower portion (3a) of pipe section (3) and the upper portion of the main drain (1) is nearly zero.

2. The union of Claim 1, characterized in that the length (L) of the portion of pipe section (3) which penetrates into the main drain (1) is sufficient to enable same to rest on the bottom of the ditch in which the main drain is to be laid in order to prevent any sagging of said pipe section (3).

3. The union of any Claims 1 or 2, characterized by an orifice drilled through the wall of said pipe section (3) for checking the length of penetration of the drain pipe (1) into the pipe section.

4. The union of any of Claims 1 to 3, characterized in that the elbow (4) of pipe section (3) which is to be fitted into said clip (6) is outflared and that the diameter (D) of its end aperture is greater than the diameter of said main drain (1).

5. The union of any of Claims 1 to 4, characterized in that said detent-positioning and coupling means consist of claws (11) projecting from the inner surface either of said aperture (5) of said clip (6) or of the terminal elbow (4) of said pipe section (3), and also of a matching peripheral groove (12) formed either in the terminal elbow (4) of pipe section (3) or in the aperture (5) of said clip (6).

**Ansprüche**

1. Verzweigungsanschluß einer Drainageleitung an eine Sammelleitung (1) mit einem abgewinkelten Rohr (3) und einem, an eine Sammelleitung (1) ansetzbaren, das Rohr (3) aufnehmenden Clip (6), der mit einer vor einer entsprechenden Durchbrechung der Sammelleitung (1) angeordneten Öffnung (5) mit einem, der Durchbrechung und der Form der Sammelleitung angepaßten, in das Innere der Sammelleitung (1) hineinreichenden Rand (8) versehen ist, dadurch gekennzeichnet, daß der Umfang der Öffnung (5) im Clip (6) und das entsprechende Ende des Rohres (3) mit komplementären Rastvorrichtungen (11, 12) ausgestattet sind, die eine freie Drehung des Rohres (3) im Clip (6) ermöglichen, und dadurch, daß die untere Mantelfläche des Rohres (3) derart zur oberen Mantelfläche der Sammelleitung (1) ausgerichtet ist, daß der Höhenabstand (e) zwischen der unteren Fläche (3a) des Rohres (3) und der oberen Fläche der Sammelleitung (1) etwa Null ist.

2. Anschluß nach Anspruch 1, dadurch gekennzeichnet, daß die Länge (L) des Anschlußstückes des Rohres (3) ausreichend lang ist, um es auf dem Boden des Grabens für die Drainageleitung abzustützen, um ein Einsinken des Rohres (3) zu vermeiden.

3. Anschluß nach einem der Ansprüche 1 und 2, dadurch gekennzeichnet, daß das Rohr (3) mit einer Öffnung (15) versehen ist, durch welche die Länge der in das Rohr eingesteckten Drainageleitung kontrolliert werden kann.

4. Anschluß nach einem der Ansprüche 1 bis 3, dadurch gekennzeichnet, daß das abgewinkelte Ende (4) des Rohres (3) vor dem Einsetzen in den Clip (6) erweitert ist und die Abschlußöffnung einen Durchmesser (D) aufweist, der größer ist als der (d) der Drainageleitung.

5. Anschluß nach einem der Ansprüche 1 bis 4, dadurch gekennzeichnet, daß die Rastvorrichtung Haken (11) in der Öffnung (5) des Clips (6) oder am Endabschnitt (4) des Rohres (3) und eine entsprechende Nut (12) im Endabschnitt (4) des Rohres (3) oder an der Öffnung (5) des Clips (6) aufweisen.

0 020 213

Fig:1

Fig:2

1

*Fig:3*

*Fig:4*

*Fig:5*

2